# NOUVEAU FASCICULE DE BREVET EUROPEEN

(11) **EP 1 352 564 B2**
(45) Date de publication et mention de la décision concernant l'opposition: **24.06.2015**
(45) Mention de la délivrance du brevet: 12.07.2006
(21) Numéro de dépôt: 03005185.8
(22) Date de dépôt: 07.03.2003
(51) Int. Cl.: A21D 10/00, A21D 8/02, A21D 8/04, A21D 2/26, A21D 2/16, A21D 2/22

(54) **Nouveau procédé de panification pour pains de type français à goût levain**
Neues Verfahren zur Bereitung von französischem Brot mit Sauerteiggeschmack
New process for preparing bread of the French type with leaven in taste

(30) Priorité: 12.04.2002 FR 0204641
(43) Date de publication de la demande: 15.10.2003
(73) Titulaire: LESAFFRE et Cie, F-75001 Paris (FR)
(72) Inventeur: Maitre, Hubert, 59700 Marq en Baroeul (FR); Muchemblend, Jean-Jacques, 59700 Marq en Baroeul (FR)
(74) Mandataire: August & Debouzy avocats

(56) Documents cités:
- EP-A- 0 727 143
- DE-A- 4 344 107
- FR-A- 2 690 813
- FR-A- 2 744 729
- FR-A1- 2 726 434
- FR-A1- 2 777 161
- DATABASE WPI Derwent Publications Ltd., London, GB; AN 1995-374035 XP002227861 & ZA 9 400 543 A, 27 septembre 1995 (1995-09-27)
- RENARD FILIÈRE GOURMANDE vol. 66, Décembre 1999, pages 25 - 30

## Description

L'invention a pour objet une nouvelle préparation pour la panification et un procédé de panification utilisant ladite préparation pour fabriquer des pains de type français.

Il est connu de ZA-A-9400543 d'utiliser un améliorant comprenant du gluten enzymatiquement hydrolysé et séché et de la lécithine transformée riche en phospholipides, ledit améliorant contenant de préférence de la (hémi)cellulase, de l'amylase, de la pâte fermentée séchée, de l'extrait de levure, de la graisse dure, de la farine de soja, de l'acide ascorbique ou de la farine de malt, ledit améliorant permettant d'obtenir de bons volumes spécifiques et une bonne machinabilité de la pâte.

DE-A-4344107 décrit un pré-mix pour la fabrication de produits de boulangerie dit « complet » ou « intégral », comprenant l'ensemble des ingrédients du grain céréalier et pouvant également comprendre d'autres ingrédients.

FR-A-2744729 décrit une souche de levure de panification particulièrement intéressante pour être utilisée dans un procédé de pousse contrôlée et pour les procédés dits « de pousse bloquée » ou « de pousse lente ».

La panification de type français au sens strict, c'est-à-dire les procédés de panification où la pâte ne contient ni matières grasses ni sucres ajoutés est très contraignante pour le boulanger, qui doit proposer du pain frais, venant d'être cuit dès 7 heures du matin, voire avant. Ces contraintes deviennent particulièrement fortes si l'objectif en plus est d'obtenir des baguettes ayant un goût et un arôme typique dus à un levain.

La panification de type français au sens européen, correspond souvent à des pains pouvant contenir un peu de matières grasses (jusqu'à 1, au maximum jusqu'à 2 en pourcentage du boulanger) et/ou un peu de sucre(s) (jusqu'à 1, au maximum jusqu'à 2 en pourcentage du boulanger). Ci-après, sauf s'il est précisé qu'il s'agit de panification ou de pains de type français au sens strict, c'est la définition européenne plus large qui est adoptée.

La fabrication d'un pain, de préférence sous forme de baguettes, avec un levain est tout particulièrement contraignante, du fait de la nécessité de fabriquer un levain, et ensuite de l'entretenir si la méthode traditionnelle du rafraîchi des levains est employée.

Pour répondre à ces problèmes, compte tenu de ensemble des contraintes liées au travail de nuit, à la réduction des temps de travail, les temps de fabrication des pains de type français ont fortement raccourci, ils sont souvent au maximum de 3 heures, pétrissage et cuisson compris. Ces temps courts ont conduit à une détérioration de la qualité organoleptique des pains de type français.

Pour résoudre ce dernier problème, il a été proposé sur le marché des levains secs correspondant à des pâtes fermentées avec les microorganismes du levain panaire et séchées, ces produits étant souvent appelés levains secs ou farines fermentées déshydratées. Les farines des levains secs ou farines fermentées déshydratées peuvent être des farines au sens strict comme des farines de froment, appelées aussi farines de blé, des farines de seigle, et de manière générale une farine ou un mélange de farines de céréales panifiables, ou encore des issues de meunerie riches en son provenant du travail en meunerie des céréales panifiables comme le blé ou le seigle, ou encore un mélange d'issues de meunerie provenant de différentes céréales panifiables ou encore un mélange de farine(s) au sens strict et d'issue(s) de meunerie provenant de céréale(s) panifiable(s). En d'autres termes, ces farines de céréales panifiables, qui après fermentation et déshydratation donnent des levains secs, peuvent avoir des taux de cendres compris entre 0,5% et 5% en poids, voire légèrement plus de 5%, et être très riches en sons.

Ces farines fermentées obtenues par déshydratation ou séchage d'un levain ne contiennent plus de microorganismes actifs, mais elles contiennent encore une grande part des arômes formés pendant la fermentation du levain par les bactéries lactiques du levain et de préférence aussi par les levures du levain, ces arômes sont principalement de l'acide lactique, mais aussi les autres arômes de la fermentation du levain.

L'utilisation de ces farines fermentées donne dans les schémas courts de panification couramment employés aujourd'hui, des pains de type français et notamment des baguettes présentant en général peu de goût, peu de volume et ayant des défauts de présentation.

L'objet de l'invention est d'apporter une solution à ces inconvénients de l'état de la technique.

Un procédé direct de fermentation est un procédé avec un seul pétrissage, sans étape de préfermentation avant le pétrissage.

La durée de fermentation totale est la durée entre la fin du pétrissage et le début de la cuisson. Elle comprend donc toutes les étapes suivantes :
- pointage: fermentation en masse en général dans la cuve du pétrin
- division de la pâte au poids des pièces à cuire
- boulage de la pâte divisée
- détente ou repos de la pâte divisée mise en boule,
- façonnage, c'est-à-dire mise de la boule de pâte sous forme d'un pâton façonné ayant la forme définitive sous laquelle le pâton sera cuit après la fermentation finale,
- et enfin fermentation finale ou apprêt, cette fermentation finale ou apprêt pouvant comporter plusieurs étapes dont par exemple une étape de blocage entre 0 et 4°C.

Certaines de ces étapes peuvent être absentes. Par exemple, dans le cadre du procédé selon l'invention, il peut ne pas y avoir d'étape de pointage ou fermentation en cuve ou encore d'étape de façonnage. Tout dépend du procédé direct avec utilisation du froid qui est utilisé. Dans le procédé selon l'invention, tel que défini ci-dessus, ne sont reprises que les étapes essentielles.

Une variante du procédé direct de fermentation décrit ci-dessus est un procédé où le passage en chambre à température régulée concerne l'étape de pointage ou fermentation en masse intervenant avant la division.

L'adverbe « essentiellement » dans la phrase ci-dessus : « la forme de la pâte lors du pétrissage est composée essentiellement de... » signifie que le pain de type français est à prendre dans sa définition la plus large, et que la pâte peut contenir d'autres farines de céréales, un peu de matières grasses, un peu de sucre(s).

De préférence, l'invention concerne un pain de type français au sens strict, appelé encore un pain courant français, composé uniquement de farine de blé (au sens strict), d'eau, de levure et de sel et éventuellement d'un certain nombre d'adjuvants des farines et d'additifs autorisés dans le pain courant français. Dans ce cadre préférentiel, l'adverbe essentiellement recouvre, par exemple, l'ajout éventuel de farine de malt, de farine de soja ou de fèves à la formule.

Dans la formule de la pâte définie dans le cadre de la présente invention, l'expression « farine de blé » est limité aux farines classiques de meunerie allant de la farine blanche à la farine complète (0,55% à 1,6% en poids de cendres), et n'inclut pas les issues de meunerie, contrairement aux farines pouvant servir pour l'élaboration de la farine de céréales panifiables fermentée déshydratée ou levain sec qui peuvent inclure des issues de meunerie. Les farines de blé entrant dans la formule de la pâte peuvent être complétées par les adjuvants classiques de meunerie, comme par exemple un ajout d'amylases.

Selon un mode préféré de réalisation de l'invention, la farine de blé utilisé dans la formule de la pâte est une farine de qualité, ayant un W à l'alvéogramme Chopin supérieur à 200, de préférence supérieur à 220 et ne contenant pas d'acide ascorbique, ni de farine de soja ou de fèves.

Dans le calcul des pourcentages du boulanger, seule la farine au sens strict, en général de blé issue du moulin est prise en compte comme quantité de farine ramenée à 100. La farine entrant dans la farine de céréales panifiables fermentée déshydratée, quelle que soit la céréale ou les céréales, n'est pas prise en compte dans le calcul, de même que le gluten de blé, qui est bien entendu du gluten vital.

La levure utilisée peut être une crème de levure, une levure sèche ou une levure fraîche ou pressée. Dans ce qui suit, les quantités de levure utilisées pour la mise en oeuvre de la pâte sont exprimées en quantités équivalentes de levure fraîche ou pressée à 30% de matières sèches.

De préférence, la farine de céréales panifiables fermentée et déshydratée a été obtenue par déshydratation ou séchage d'un levain à base de farine de blé et/ou de seigle, et encore de préférence d'un levain à base de farine de blé ou d'issues de meunerie provenant du blé ou encore d'un mélange de farine(s) et d'issue(s) de meunerie riches en sons fins ou micronisés. Un levain est par définition une pâte en fermentation par des bactéries lactiques et aussi de préférence des levures. Cette farine fermentée déshydratée est caractérisée par le fait qu'elle contient de l'acide lactique issu de la fermentation des bactéries de levain. Cette farine fermentée déshydratée contient de préférence au moins 1% en poids d'acide lactique, et encore de préférence au moins 10% en poids d'acide lactique.

De préférence, les mono- et diglycérides d'acides gras saturés alimentaires sont des produits, connus en tant que monoglycérides distillés d'acides gras saturés alimentaires, contenant au moins 90% en poids de monoglycérides.

Avant la cuisson, si le pâton a été façonné, il est souvent scarifié, c'est-à-dire entaillé par une lame.

Les valeurs ci-dessus de la formule de la pâte sont exprimées en kg si on les ramène à 100 kg de farine, ou en pourcentage si on ramène la farine à 100, selon le pourcentage du boulanger.
Dans la formule ci-dessus, on aura au moins l'une des caractéristiques suivantes, de préférence deux de ces caractéristiques, et encore de préférence les trois caractéristiques suivantes en pourcentages du boulanger :
■ la quantité d'eau de préférence est comprise entre 57 et 64, de préférence entre 57 et 63, encore plus préférentiellement entre 58 et 62,
■ la quantité de levure fraîche ou levure pressée à 30% environ de matières sèches est entre 1,0 et 3,5, de préférence entre 1,7 et 3,0 si le procédé est une pousse contrôlée, de préférence entre 1,0 et 1,5 si le procédé est une pousse lente,
■ la quantité de sel est entre 1,8 et 3,0, de préférence entre 1,8 et 2,2 et encore de préférence de 2,0.

Le procédé de panification selon l'invention a notamment l'avantage de permettre la fabrication de pains ayant un goût savoureux apprécié avec des doses de sel correspondant aux doses plus faibles conseillées par les Agences Gouvernementales de Sécurité Sanitaire des Aliments.

Selon le procédé de l'invention permettant d'améliorer la conservation des pains selon l'invention et notamment la conservation et leur fraîcheur, la farine de céréales panifiables fermentée déshydratée ou levain sec est partiellement remplacée par du son de céréales panifiables de préférence micronisé, encore de préférence du son micronisé de blé. Le son micronisé est du son broyé finement dont la taille moyenne des particules se situe de préférence autour de 100 à 200 microns. A titre de comparaison, la taille des particules d'une farine est comprise entre 80 et 160 microns et celle des particules d'un son fin entre 0,5 à 1 mm.

Selon l'invention, 30% à 60%, de préférence 40% à 50% en poids de la farine de céréales panifiables fermentée est remplacée par du son, de préférence micronisé, comme du son de blé micronisé. Ainsi, dans la formule de la pâte, on aura notamment (en pourcentages du boulanger) :
- farine de céréales panifiables fermentée déshydratée 0,40 à 1,20, de préférence 0,50 à 1,00.
- son, de préférence micronisé, comme le son de blé micronisé 0,40 à 1,00, de préférence 0,50 à 0,80.

Les chambres de fermentation à température régulée ou chambres de fermentation régulée sont également appelées chambres à fermentation contrôlée (= régulée) ou chambres à pousse contrôlée.

Ce nouveau procédé selon l'invention a en général deux avantages clairs :
- il permet d'obtenir des pains de type français, et notamment des baguettes, ficelles, boulots, etc, ayant une belle présentation et un bon goût lié à une fermentation longue avec la levure et à l'emploi d'une farine fermentée obtenue par déshydratation d'un levain, dont les substances aromatisantes et notamment les substances aromatisantes acides, apportées par la fermentation lactique du levain ont été conservées et se marient bien avec l'arôme développé par la fermentation longue à la levure.
- l'obtention de ces pains demande au boulanger seulement deux interventions déconnectées dans le temps :
   - la préparation des pâtons éventuellement façonnés et leur mise en chambre de fermentation à température régulée
   - et généralement le lendemain, la sortie des pâtons de la dite chambre de fermentation contrôlée pour leur mise au four et leur cuisson.

La synergie entre les arômes apportés par la fermentation lente à basse température par la levure et les arômes apportés par la farine fermentée déshydratée est particulièrement intéressante et donne des pains particulièrement savoureux et appréciés.

De plus, la présentation (le volume et l'aspect) des pains obtenus selon l'invention est excellente. La mie a une belle couleur crème, les coups de lames sont bien ouverts et bien jetés.

La fermentation régulée ou contrôlée des pâtons éventuellement façonnés peut être réalisée sur couche et la cuisson est alors réalisée de préférence sur sole dans un four à sole fixe. La fermentation régulée ou contrôlée des pâtons éventuellement façonnés peut être réalisée sur filets et la cuisson de préférence est alors réalisée en four rotatif.

Après la division et éventuellement le façonnage, trois schémas de fermentation sont possibles dans la chambre de fermentation à température régulée :
- la fermentation ou pousse (classique) contrôlée en deux étapes
- la pousse lente
- le préfermenté-bloqué ou poussé-bloqué.
   La fermentation ou pousse contrôlée est réalisée en deux étapes dans une chambre de fermentation contrôlée où la température et de préférence aussi l'humidité sont régulées automatiquement. Schématiquement, la pâte est pétrie, divisée et éventuellement façonnée. Les pâtons sont déposés sur des plateaux alvéolés (filets) ou sur couches.
   - La première étape consiste à bloquer la fermentation à environ 2°C pendant une durée qui peut aller jusqu'à 48 heures, voire exceptionnellement 72 heures.
   - La seconde étape consiste à réchauffer les pâtons à environ 20°C, jusqu'à ce que la levée des pâtons soit correctement réalisée. La durée de cette étape dépend de la température de consigne qui est généralement entre 18°C et 20°C et de la dose de levure. Elle dure généralement de 3 à 4 heures pour une dose de levure fraîche (à 30 % de matières sèches) de 2 à 3 (en pourcentage du boulanger).

Ces deux étapes sont programmées et se déroulent automatiquement. Il ne reste plus au boulanger qu'à procéder le cas échéant à la scarification avant enfournement, dans un four à chariot rotatif ou à sole fixe.

La pousse lente est réalisée en une seule étape dans une chambre de fermentation contrôlée où au moins la température est régulée automatiquement. Il n'y a pas de phase de blocage de la fermentation. Les pâtons éventuellement façonnés sont mis en chambre de fermentation contrôlée à une température d'environ 10°C, c'est-à-dire généralement comprise entre 8°C et 12°C, généralement la veille pour le lendemain, soit pendant 12 à 15 heures, voire 12 à 18 heures.

Le poussé-bloqué ou préfermenté-bloqué est un schéma où les deux étapes de la fermentation ou pousse contrôlée sont inversées. Il peut également être décrit comme un schéma direct de panification normal ou habituel dans lequel les pâtons éventuellement façonnés subissent un apprêt donnant un développement ou levée du pâton de 70 à 80% du développement habituellement recherché. Les pâtons sont alors refroidis rapidement à une température entre 0 et 2°C, ce qui permettra de bloquer la fermentation pendant 12 à 15 heures voire plus. Avant cuisson, le pâton est réchauffé à plus de 20°C pendant un temps court, d'une heure maximum, puis éventuellement scarifié. Ces trois étapes peuvent être programmées dans une chambre de fermentation contrôlée, ou encore la mise en chambre de fermentation contrôlée peut avoir lieu uniquement après la première étape correspondant à la première partie de l'apprêt.

Ce schéma de poussé-bloqué ou préfermenté-bloqué est réalisé de préférence avec une farine de blé ayant plus de 12% en poids de protéines et un W supérieur à 250 sans ajout d'acide ascorbique.

Bien entendu dans ces schémas où la fermentation finale est réalisée en chambres de fermentation régulée, des étapes intermédiaires à des températures intermédiaires, comme des paliers de réchauffement peuvent être prévues.

De préférence, le procédé selon l'invention est réalisé par la mise en oeuvre de l'un des deux premiers procédés décrits ci-dessus : la fermentation ou pousse contrôlée en deux étapes et la pousse lente. L'invention concerne également des procédés directs de panification pour pains de type français où le passage au froid est réalisé avant la division, c'est-à-dire pendant le pointage qui est réalisé en bacs, à moins de 10°C.

Selon l'invention, le nouvel améliorant de panification permettant à la fois d'améliorer le goût du pain et la conservation de sa mâche ou de la fraîcheur, c'est-à-dire de retarder un rassissement, dans un schéma direct de panification avec emploi d'une chambre à fermentation régulée ou contrôlée, apporte en grammes pour 100 g de farine :
- farine de céréales panifiables fermentées déshydratées: 0,40 à 1,20, de préférence 0,50 à 1,00.
- son, de préférence micronisé, comme le son de blé, micronisé : 0,40 à 1,00, de préférence 0,50 à 0,80
- gluten de blé : 0,30 à 1,00, de préférence entre 0,35 et 0,70, et encore de préférence entre 0,40 et 0,65
- mono- et diglycérides d'acides gras saturés alimentaires : 0,10 à 0,30 de préférence entre 0,15 et 0,25
- acide ascorbique : 0,008 à 0,025, de préférence entre 0,009 et 0,018
- préparation enzymatique : apport d'activités amylases et/ou hémicellulases et/ou glucose oxydases et/ou lipases et/ou phospholipases.

Les valeurs ci-dessus sont exprimées en kg si on raisonne pour 100 kg de farine ou en pourcentage, si on raisonne en pourcentage du boulanger où la quantité de farine de blé mise en oeuvre est ramenée à 100.

La présente invention concerne ainsi un procédé direct de panification pour la production de pains de type français, le dit procédé ayant une durée de fermentation totale, c'est-à-dire une durée entre la fin du pétrissage et le début de la cuisson, de plus de 12 heures.

L'invention propose un procédé selon la revendication 1.

Le procédé suivant l'invention comprend également les procédés où l'emploi d'une température inférieure à 15°C est réalisé avant l'étape de la division de la pâte, c'est-à-dire où l'emploi d'une température inférieure à 15°C a lieu lors de l'étape de pointage, celui-ci se faisant généralement en bacs.

La préparation enzymatique présente avantageusement au moins une activité amylase et/ou hémicellulase et/ou glucose oxydase et/ou lipase et/ou phospholipase, de préférence au moins deux de ces activités, et encore de préférence au moins trois de ces activités l'activité amylase étant de préférence une activité alpha-amylase.

La farine de céréales panifiables fermentée déshydratée est typiquement obtenue par séchage d'un levain à base de farine de blé, d'un levain à base d'une farine de seigle ou d'un levain à base d'un mélange de farine de blé et farine de seigle. La farine de céréales panifiables fermentée déshydratée est avantageusement obtenue par séchage d'un levain à base de farine de blé.

La formule de la pâte non préfermentée présente avantageusement une ou deux des caractéristiques suivantes, et de préférence les trois caractéristiques suivantes :
1. pour 100 parties en poids de farine de blé : l'hydratation est comprise entre 57 et 63 parties en poids d'eau, de préférence entre 58 et 62 parties en poids d'eau ;
2. pour 100 parties en poids de farine de blé : une quantité de levure qui est équivalente à entre 1,0 et 3,5 parties en poids d'une levure fraîche (pressée) à 30% de matières sèches, de préférence cette quantité de levure est équivalente à entre 1,7 et 3,0 parties en poids d'une levure fraîche à 30% de matières sèches si le procédé est une pousse contrôlée, de préférence entre 1,0 et 1,5 parties en poids si le procédé est une pousse lente ;
3. pour 100 parties en poids de farine de blé : la quantité de sel (NaCI ou sel de cuisine) est comprise entre 1,8 et 3,0 parties en poids de sel, de préférence entre 2,0 et 2,2 parties en poids, encore de préférence elle est d'environ 2,0 parties en poids.

Suivant une forme d'exécution du procédé suivant l'invention, la fermentation des pâtes en masse ou des pâtons divisés et éventuellement façonnés comporte au moins deux étapes, dont une étape où la température dans la chambre de fermentation contrôlée est choisie entre 0 et 4°C et une étape où la température dans la chambre de fermentation contrôlée est égale ou supérieure à 15°C.

Dans ce cas, la fermentation des pâtons divisés et éventuellement façonnés comporte de manière utile :
- une première étape où la température dans la chambre de fermentation contrôlée est choisie entre 0 et 4 °C, la dite première étape ayant une durée inférieure ou égale à 72 heures, de préférence inférieure ou égale à 48 heures, et
- une seconde étape où la température dans la chambre de fermentation contrôlée est choisie entre 18 et 25°C, de préférence entre 18 et 20°C, la dite seconde étape ayant une durée permettant d'obtenir le volume désiré pour les pâtons.

Suivant une autre forme d'exécution, la fermentation des pâtons éventuellement façonnés consiste en une étape où la température dans la chambre de fermentation contrôlée est choisie entre 7 et 13 °C, de préférence entre 9 et 11 °C.

Dans ce cas, l'étape de la fermentation des pâtons a de manière utile une durée de 12 à 15 heures, voire jusqu'à 18 ou 20 heures.

Suivant une autre forme d'exécution, la fermentation des pâtons éventuellement façonnés comporte les étapes successives suivantes :
- une étape où la température est choisie entre 18 et 25 °C, de préférence entre 18 et 23°C,
- un refroidissement des pâtons dans une chambre de fermentation contrôlée à une température choisie entre 0 et 4°C, de préférence à une température de 0°C, en 60 minutes maximum,
- une étape où la température dans la chambre de fermentation contrôlée est choisie entre 0 et 4°C, cette étape ayant une durée inférieure ou égale à 15 heures, et
- un réchauffage des pâtons dans la chambre de fermentation contrôlée à une température choisie entre 20 et 30°C en moins de 60 minutes.

La chambre de fermentation contrôlée utilisée dans le procédé suivant l'invention est de préférence une chambre où la température peut être réglée dans un intervalle d'au moins 0 à 30°C et où l'humidité ambiante peut également être régulée.

De préférence, la pâte non préfermentée est une pâte correspondant à un pain de type français au sens strict, mais elle peut correspondre aux habitudes européennes correspondant à des pâtes contenant aussi un peu de matières grasses, et/ou un peu de sucres (comme mentionné ci-dessus), et/ou d'autres farines de céréales.

Selon l'invention, la farine de céréales panifiables fermentée et déshydratée est partiellement remplacée par 30 à 60%, de préférence 40 à 50% de son, de préférence du son micronisé, et notamment du son de blé micronisé. Ainsi, selon l'invention on peut avantageusement avoir en parties en poids pour 100 parties en poids de farine :
■ farine de céréales panifiables fermentée déshydratée 0,40 à 1,20, de préférence 0,50 à 1,00
■ son, de préférence micronisé, comme le son de blé micronisé 0,40 à 1,00, de préférence 0,50 à 0,80.

La présente invention concerne également une préparation pour la fabrication de pains de type français.

La préparation suivant l'invention permet d'apporter à 100 parties en poids de farine de blé :
- un ensemble constitué de 0,40 à 1,20 parties en poids, de préférence 0,60 à 1,00 parties en poids de farine de céréales panifiables fermentée déshydratée et de 0,40 à 1,00 parties en poids, de préférence 0,50 à 0,80 parties en poids de son, de préférence de son micronisé, comme le son de blé micronisé.
- 0,30 à 1,00 partie en poids de gluten de blé, de préférence entre 0,35 et 0,70 partie en poids, et encore de préférence entre 0,40 et 0,65 partie en poids ;
- 0,10 à 0,30 partie en poids de mono- et diglycérides d'acides gras saturés alimentaires, de préférence entre 0,15 et 0,25 partie en poids, les dits mono- et diglycérides d'acides gras saturés alimentaires contenant de préférence au moins 90% de monoglycérides;
- 0,008 à 0,025 partie en poids d'acide ascorbique, de préférence entre 0,009 et 0,018 partie en poids ; et
- une préparation enzymatique.

Dans la préparation suivant l'invention, les quatre premiers composants mentionnés ci-dessus sont donc présents en des quantités qui se rapportent l'une à l'autre comme suit :
- un ensemble où 30 à 60%, de préférence 40 à 50 % de la farine de céréales panifiables fermentée déshydratée est remplacée par du son, de préférence micronisé, comme du son de blé micronisé, ce qui donne par exemple pour ces deux produits les nouvelles proportions définies ci-dessus ;
- à 1,00 partie en poids de gluten de blé, de préférence entre 0,35 et 0,70 partie en poids, et encore de préférence entre 0,40 et 0,65 partie en poids ;:

- 0,10 à 0,30 partie en poids de mono- et diglycérides d'acides gras saturés alimentaires, contenant avantageusement au moins 90% en poids de monoglycérides, de préférence entre 0,15 et 0,25 partie en poids ;
- 0,008 à 0,025 partie en poids d'acide ascorbique, de préférence entre 0,009 et 0,018 partie en poids.

La préparation enzymatique présente avantageusement au moins une activité amylase et/ou hémicellulase et/ou glucose oxydase et/ou lipase et/ou phospholipase, de préférence au moins deux de ces activités, et encore de préférence au moins trois de ces activités, l'activité amylase étant de préférence une activité alpha-amylase.

La farine de céréales panifiables fermentée déshydratée est avantageusement obtenue par séchage d'un levain à base de farine de blé, d'un levain à base d'une farine de seigle ou d'un levain à base d'un mélange de farine de blé et farine de seigle
ou encore d'un levain à base d'issue(s) de meunerie riche(s) en son, éventuellement broyée(s), ou encore d'un mélange de farine(s) de céréales panifiables et d'issue(s) de meuneries provenant de farines panifiables et éventuellement broyée(s) pour avoir une granulométrie homogène avec celle de la farine au sens strict. La farine de céréales panifiables fermentée déshydratée est de préférence obtenue par séchage d'un levain à base de farine de blé au sens large.

La préparation suivant l'invention se présente de préférence sous forme d'éléments solides finement divisés, encore de préférence sous forme de poudre ou de fins granulés.

La préparation est de préférence ensachée en sacs de 5 à 30 kg. Ces sacs doivent être étiquetés et comporter une indication du mode d'emploi de la préparation. Ce mode d'emploi comporte généralement le ou les types de panification recommandés et toujours la dose d'emploi exprimée typiquement par rapport à 100 parties en poids ou 100 kg de farine de céréales panifiables mise en oeuvre dans la pâte ou par rapport à l'eau d'hydratation de la pâte, appelée aussi eau de coulage. Comme indiqué ci-dessus, l'hydratation de la pâte est d'environ 60 parties en poids d'eau par 100 parties en poids de farine, ou encore 60 litres ou kilos d'eau par rapport à 100 kg de farine mise en oeuvre.

Un exemple d'une préparation hors de l'invention, appelée ci-après Crousti-Levain^{®}, conçue pour être utilisée à 2 % en poids par rapport à la farine en général de blé mise en oeuvre dans la formule de la pâte, présente la composition suivante exprimée en pourcentages en poids du poids total de ladite préparation :
- farine de céréales panifiables fermentée déshydratée :60% à 70%
- gluten de blé 20% à 25%
- monoglycerides distillés d'acides gras saturés 7,5% à 12,5%
- acide ascorbique 0,5% à 1,0%
- préparation enzymatique 0,05% à 0,20%
- charge sous forme de farine de blé
ou d'un produit de complément équivalent pour arriver à 100%.

Un exemple d'une préparation correspondant à l'invention conçu pour être utilisé à 2% en poids par rapport à la farine mise en oeuvre dans la formule de la pâte, présente la composition suivante exprimée en pourcentages du poids total de ladite préparation :
- farine de céréales panifiables fermentée déshydratée :30 à 45 %
- son de blé micronisé 25 à 35%
- gluten de blé 20% à 25%
- monoglycerides distillés d'acides gras saturés 7,5% à 12,5%
- acide ascorbique 0,5% à 1,0%
- préparation enzymatique 0,05% à 0,20%
- charge sous forme de farine de blé
ou d'un produit de complément équivalent pour arriver à 100%.

La farine de céréales panifiables fermentée déshydratée est une farine de blé fermentée déshydratée contenant typiquement plus de 100 g d'acide lactique par kg, de préférence environ 150g d'acide lactique par kg.

La préparation enzymatique apporte des α-amylases et des hémicellulases (xylanases).

La présente invention concerne également l'utilisation de la préparation suivant l'invention dans un procédé de panification pour la production de pains de type français de préférence de pain de type français au sens strict, et en particulier dans un procédé de panification suivant l'invention tel que décrit ci-dessus.

Dans la description ci-dessus, quand un intervalle entre deux valeurs est précisé, les deux valeurs définissant les extrémités de cet intervalle sont comprises dans les valeurs à retenir pour la mise en oeuvre de la présente invention.

L'invention sera mieux comprise à l'aide des exemples suivants.

### Exemple 1 - Schéma de pousse contrôlée classique (hors de l'invention)

On réalise des pains de type français en forme de baguettes selon le schéma de pousse contrôlée classique donné dans le tableau 1.

La formule de la pâte est donnée dans le tableau 2. La farine Baguépi^{®} T65 est une farine de blé vendue par les Grands Moulins de Pantin-Soufflet, ayant les caractéristiques suivantes :
- teneur en protéines ≥ 12%,
- valeur W à l'alvéogramme Chopin ≥ 240.

Cette farine ne contient aucun adjuvant. Tout autres farine de blé de qualité du même type peut être utilisée pour la mise en oeuvre de l'exemple 1.

Un témoin, est réalisé avec l'améliorant IBIS^{®} vendu par la GIE Lesaffre, 103, rue Jean Jaurés, 94701 Maisons-Alfort, France et par Lesaffre International, 137, rue Gabriel Péri, 59700 Marcq-en-Baroeul, France pour être utilisé à 1% sur poids de farine mise en oeuvre en travail en chambre de fermentation contrôlée. Cet améliorant apporte principalement un dosage optimum d'acide ascorbique et une préparation enzymatique (alpha-amylases, xylanases) sélectionnée pour le travail en pousse contrôlée.

**Tableau 1 : schéma de panification**

| | |
|---|---|
| Pétrissage en pétrin spiral | 4 minutes en première vitesse 6 minutes en seconde vitesse |
| Température de la pâte | 22°C |
| Pointage en cuve | absence |
| Division | en pâtons de 350 g |
| Boulage | mise en boule de chaque pâton |
| Détente | pendant 25 minutes |
| Façonnage | façonnage mécanique, longueur 65 cm |
| Fermentation sur filets en chambre de fermentation contrôlée à 2°C | pendant 48 h |
| Apprêt sur filets en chambre de fermentation contrôlée à 18°C et à 80% d'humidité relative | pendant 3 h 30 min |
| Scarification | scarification manuelle , 7 coups de lame |
| Cuisson | cuisson avec buée, en four rotatif ventilé, à une température allant de 230°C à 200°C, pendant 21 minutes |

**Tableau 2 : formule de la pâte (en pourcentages du boulanger)**

| | Exemple | témoin |
|---|---|---|
| Farine Baguépi^{®} T65 | 100 | 100 |
| Eau | 59 | 59 |
| Levure fraîche | 3 | 3 |
| Sel | 2 | 2 |
| Crousti-Levain^{®} | 2 | 0 |
| IBIS^{®} | 0 | 1 |

La baguette obtenue a un volume spécifique identique à celui de la baguette témoin, et une présentation légèrement meilleure. La baquette obtenue ne présente aucune cloque, et de manière générale aucun défaut pour un boulanger français.

Dans cet essai, les volumes spécifiques sont élevés, de l'ordre de 6 ml par g. Les baguettes obtenues ont un poids de l'ordre de 256 à 260 g et un volume de l'ordre de 1550 ml.

La pâte correspondant à la formule a montré des bonnes propriétés rhéologiques, elle a une bonne machinabilité et elle a été d'un travail facile.

L'ensemble de ces résultats montre que les différents ingrédients de la préparation fonctionnent en synergie et éliminent les inconvénients qui sont généralement dus à l'emploi de farine fermentée au niveau du travail des pâtes, de leur machinabilité, du volume des pains obtenus.

Le même essai conduit avec une farine des Moulins du Nord, Aire sur la Lys, France, ayant un taux de protéines de 11,7% et un W de 219 a confirmé ces résultats. Un autre essai avec cette farine a montré que la préparation permettait même une hydratation supérieure de la pâte, ce qui était inattendu. Les baguettes dans ces essais avaient des volumes spécifiques de l'ordre de 5 ml/g.

Dans tous ces essais, les baguettes se distinguaient par rapport aux baguettes témoins :
- par un goût beaucoup plus savoureux avec une note de fermentation au levain agréable, dû à la synergie et à l'harmonie entre les arômes de levain apportés par la farine fermentée et les arômes développés par la fermentation lente à basse température par la levure,
- par une couleur de mie plus riche, plus chaude et plus rustique : une couleur crème ou ivoire plus proche de la couleur d'une mie d'un pain au levain de type français,
- par une couleur de croûte plus intense,
- par une fraîcheur, et donc une durée de conservation prolongée dans le temps, le pain suivant l'invention gardant plus longtemps son aspect fraîchement cuit fortement apprécié par le consommateur.

### Exemple 2 - Schéma de pousse lente (hors de l'invention)

On réalise des pains de type français en forme de baguettes selon le schéma de pousse lente donné dans le tableau 3.

La formule de la pâte est donnée dans le tableau 4.

**Tableau 3 : schéma de panification**

| | |
|---|---|
| Pétrissage en pétrin spiral | 3 minutes en première vitesse 5 minutes en seconde vitesse |
| Température de la pâte | 23,5°C |
| Pointage en cuve | pendant 15 minutes |
| Division | en pâtons de 350 g |
| Boulage | mise en boule de chaque pâton |
| Détente | pendant 20 minutes |
| Façonnage | façonnage mécanique, longueur 65 cm |
| Fermentation ou apprêt sur couche en chambre de fermentation contrôlée à 10°C | pendant 12 h |
| Scarification | scarification manuelle, 7 coups de lame |
| Cuisson | cuisson avec buée, en four sole fixe, à 240°C, pendant 23 minutes |

**Tableau 4: formule de la pâte (en pourcentages du boulanger)**

| | Exemple |
|---|---|
| Farine Baguépi^{®} T65 | 100 |
| Eau | 60 |
| Levure fraîche | 2 |
| Sel | 2 |
| Crousti-Levain^{®} | 2 |

Les baguettes obtenus par le procédé de pousse lente suivant l'invention présentent également les qualités particulièrement appréciées par le consommateur énumérées ci-dessus dans le cadre de l'exemple 1.

### Exemple 3

Les mêmes essais ont été réalisés avec la formule correspondant à la variante selon l'invention avec remplacement d'une partie de la farine de céréales panifiables fermentée et déshydratée par du son de blé micronisé ayant la composition suivante :
■ humidité 5% à 10%
■ fibres alimentaires totales de 45% dont :

■ fibres insolubles 85%
■ fibres solubles 15%
■ protéines 18%
■ matières grasses 4%
■ matières minérales 5%
et une granulométrie où 90% des particules sont inférieures à 200 microns.

Une hydratation de la pâte supérieure de 1 à 3 % et une meilleure conservation de la fraîcheur des pains sont obtenues.

## Revendications

1. Procédé direct de panification pour la production de pains de type français, ayant une durée de fermentation totale de plus de 12 heures, procédé comprenant :
- un pétrissage d'une pâte non préfermentée ayant une formule essentiellement composée de farine de blé, d'eau, de levure, de sel, d'une préparation enzymatique et, pour 100 parties en poids de farine de blé :
∘ 0,40 à 1,20 parties en poids de farine de céréales panifiables fermentée déshydratée, de préférence entre 0,50 et 1,00 parties en poids ;
∘ 0,40 à 1,00 parties en poids de son, de préférence entre 0,50 et 1,00 parties en poids, ce son étant de préférence du son micronisé et encore de préférence du son micronisé de blé ;
∘ 0,30 à 1,00 partie en poids de gluten de blé, de préférence entre 0,35 et 0,70 partie en poids, et encore de préférence entre 0,40 et 0,65 partie en poids ;
∘ 0,10 à 0,30 partie en poids de mono- et diglycérides d'acides gras saturés alimentaires, de préférence entre 0,15 et 0,25 partie en poids, les dits mono- et diglycérides d'acides gras saturés alimentaires contenant de préférence au moins 90% de monoglycérides ; et
∘ 0,008 à 0,025 partie en poids d'acide ascorbique, de préférence entre 0,009 et 0,018 partie en poids ;
- une division et éventuellement un façonnage de la pâte pétrie sous forme de pâtons;
- fermentation des pâtons dans une chambre de fermentation contrôlée, la dite fermentation des pâtons comportant au moins une étape où la température dans la chambre de fermentation contrôlée est inférieure ou égale à 15°C, de préférence inférieure ou égale à 12°C ; et
- cuisson des pâtons fermentés,
la durée de fermentation totale étant la durée entre la fin du pétrissage et le début de la cuisson.

2. Procédé suivant la revendication 1, modifié en ce que l'étape en chambre à température inférieure ou égale à 15°C, de préférence inférieure ou égale à 12°C a lieu, pour la pâte pétrie en masse, avant la division.

3. Procédé suivant l'une quelconque des revendications 1 à 2 où les pains de type français sont des pains de type français au sens strict.

4. Procédé suivant l'une des revendications 1 à 3, dans lequel la préparation enzymatique présente au moins une activité amylase et/ou hémicellulase et/ou glucose oxydasse et/ou lipase et/ou phospholipase, de préférence au moins deux de ces activités, et encore de préférence au moins trois de ces activités.

5. Procédé suivant l'une quelconque des revendications 1 à 4, dans lequel la farine de céréales panifiables fermentée déshydratée a été obtenue par séchage d'un levain à base de farine de blé, d'un levain à base d'une farine de seigle ou d'un levain à base d'un mélange de farine de blé et farine de seigle ou encore d'un levain à base d'issues de meunerie de céréales panifiables ou encore d'un levain à base d'un mélange de farine(s) et d'issue(s) de meunerie de céréales panifiables, de préférence, la farine de céréales panifiables fermentée déshydratée a été obtenue par séchage d'un levain à base de blé.

6. Procédé suivant l'une quelconque des revendications précédentes, dans lequel la formule de la pâte non préfermentée est **caractérisée par** l'une des trois caractéristiques suivantes, de préférence deux de ces caractéristiques, et encore de préférence les trois caractéristiques suivantes : la pâte contient, pour 100 parties en poids de farine de blé :
- entre 57 et 64 parties en poids d'eau, de préférence entre 57 et 63 parties en poids d'eau, de préférence entre 58 et 62 parties en poids ; et/ou
- de la levure en une quantité équivalente à entre 1,0 et 3,5 parties en poids d'une levure fraîche à 30% de matières sèches, de préférence équivalente à entre 1,7 et 3,0 parties en poids d'une levure fraîche à 30% de matières sèches si le procédé est une pousse contrôlée, de préférence entre 1,0 et 1,5 parties en poids si le procédé est une pousse lente, et/ou
- entre 1,8 et 3,0 parties en poids de sel, de préférence entre 2,0 et 2,2 parties en poids, encore de préférence environ 2,0 parties en poids.

7. Procédé suivant l'une quelconque des revendications précédentes, dans lequel la fermentation des pâtons éventuellement façonnés comporte au moins deux étapes, dont une étape où la température dans la chambre de fermentation contrôlée est entre 0 et 4°C et une étape où la température dans la chambre de fermentation contrôlée est égale ou supérieure à 15°C.

8. Procédé suivant la revendication 7, dans lequel la fermentation des pâtons éventuellement façonnés comporte :
- une première étape où la température dans la chambre de fermentation contrôlée est entre 0 et 4 °C, la dite première étape ayant une durée inférieure ou égale à 72 heures, de préférence inférieure ou égale à 48 heures, et
- une seconde étape où la température dans la chambre de fermentation contrôlée est entre 18 et 25°C, de préférence entre 18 et 20°C, la dite seconde étape ayant une durée permettant d'obtenir le volume désiré pour les pâtons façonnés.

9. Procédé suivant l'une quelconque des revendications 1 à 6, dans lequel la fermentation des pâtons éventuellement façonnés consiste en une étape où la température dans la chambre de fermentation contrôlée est entre 7 et 13°C, de préférence entre 9 et 11 °C, cette étape unique ayant une durée de 12 à 15 heures.

10. Procédé suivant l'une quelconque des revendications 1 et 3 à 6, dans lequel la fermentation des pâtons éventuellement façonnés comporte les étapes successives suivantes :
- une étape où la température est entre 18 et 25 °C, de préférence entre 18 et 23°C
- un refroidissement des pâtons dans la chambre de fermentation contrôlée à une température entre 0 et 4°C, de préférence à une température de 0°C, en 60 minutes maximum,
- une étape où la température dans la chambre de fermentation contrôlée est entre 0 et 4°C, cette étape ayant une durée inférieure ou égale à 15 heures, et
- un réchauffage dans la chambre de fermentation contrôlée des pâtons à une température entre 20 et 30°C en moins de 60 minutes.

11. Préparation pour la fabrication de pains de type français permettant d'apporter à 100 parties en poids de farine de blé :
- 0,40 à 1,20 parties en poids de farine de céréales panifiables fermentée déshydratée, de préférence entre 0,50 et 1,00 parties en poids ;
- 0,40 à 1,00 parties en poids de son, de préférence entre 0,50 et 0,80 parties en poids, ce son étant de préférence du son micronisé, et encore de préférence du son de blé micronisé ;
- 0,30 à 1,00 partie en poids de gluten de blé, de préférence entre 0,35 et 0,70 partie en poids, et encore de préférence entre 0,40 et 0,65 partie en poids ;
- 0,10 à 0,30 partie en poids de mono- et diglycérides d'acides gras saturés alimentaires, de préférence entre 0,15 et 0,25 partie en poids, les dits mono- et diglycérides d'acides gras saturés alimentaires contenant de préférence au moins 90% de monoglycérides ;
- 0,008 à 0,025 partie en poids d'acide ascorbique, de préférence entre 0,009 et 0,018 partie en poids ; et
- une préparation enzymatique.

12. Préparation selon la revendication 11 où les pains de type français sont des pains de type français au sens strict.

13. Préparation suivant l'une des revendications 11 à 12, dans laquelle la préparation enzymatique présente au moins une activité amylase et/ou hémicellulase et/ou glucose oxydase et/ou lipase et/ou phospholipase, de préférence au moins deux de ces activités, et encore de préférence au moins trois de ces activités.

14. Préparation suivant l'une quelconque des revendications 11 à 12, dans laquelle la farine de céréales panifiables fermentée déshydratée a été obtenue par séchage d'un levain à base de farine de blé, d'un levain à base d'une farine de seigle ou d'un levain à base d'un mélange de farine de blé et farine de seigle ou encore d'un levain à base d'issues de meunerie de céréales panifiables ou encore d'un levain à base d'un mélange de farine(s) et d'issue(s) de meunerie de céréales panifiables, de préférence, la farine de céréales panifiables fermentée déshydratée a été obtenu par séchage d'un levain à base de blé.

15. Utilisation d'une préparation suivant l'une quelconque des revendications 11 à 14 dans un procédé de panification pour la production de pains de type français et de préférence dans un procédé de panification suivant l'une quelconque des revendications 1 à 9 et encore de préférence dans un procédé où les pains de type français sont des pains de type français au sens strict.

## Patentansprüche

1. Brotbereitungs-Direktverfahren zur Herstellung von französischem Brot mit einer Gesamtgärdauer von mehr als 12 Stunden, wobei das Verfahren aufweist:
- Kneten eines nicht vorgegärten Teigs mit einem Rezept, das im Wesentlichen aus Weizenmehl, Wasser, Hefe, Salz, einem Enzympräparat besteht sowie pro 100 Gewichtsanteilen Weizenmehl aufweist:
• 0,40 bis 1,20 Gewichtsanteile verbackbares, gegärtes dehydriertes Getreidemehl, vorzugsweise zwischen 0,50 und 1,00 Gewichtsanteile;
• 0,40 bis 1,00 Gewichtsanteile Kleie, vorzugsweise zwischen 0,50 und 1,00 Gewichtsanteile, wobei die Kleie vorzugsweise mikronisierte Kleie und noch bevorzugter mikronisierte Weizenkleie ist;
• 0,30 bis 1,00 Gewichtsanteile Weizengluten, vorzugsweise zwischen 0,35 und 0,70 Gewichtsanteile, und noch bevorzugter zwischen 0,40 und 0,65 Gewichtsanteile;
• 0,10 bis 0,30 Gewichtsanteile Mono- und Diglyceride von gesättigten Nahrungsfettsäuren, vorzugsweise zwischen 0,15 und 0,25 Gewichtsanteile, wobei die Mono- und Diglyceride von gesättigten Nahrungsfettsäuren vorzugsweise wenigstens 90% Monoglyceride enthalten; und
• 0,008 bis 0,025 Gewichtsanteile Ascorbinsäure, vorzugsweise zwischen 0,009 und 0,018 Gewichtsanteile;
- Teilen und gegebenenfalls Gestalten des gekneteten Teigs in Form von gestalteten Teiglaiben;
- Gären der Teiglaibe in einer gesteuerten Gärkammer, wobei das Gären der Teiglaibe wenigstens einen Schritt aufweist, in dem die Temperatur in der gesteuerten Gärkammer kleiner oder gleich 15°C, vorzugsweise kleiner oder gleich 12°C, ist; und
- Backen der gegorenen Teiglaibe,
wobei die Gesamtgärdauer die Dauer zwischen dem Ende des Knetens und dem Beginn des Backens ist.

2. Verfahren gemäß dem Anspruch 1, dadurch modifiziert, dass der Schritt in der Kammer bei einer Temperatur kleiner oder gleich 15°C, vorzugsweise kleiner oder gleich 12°C, vor dem Teilen für die gesamte geknetete Teigmasse stattfindet.

3. Verfahren gemäß einem der Ansprüche 1 bis 2, wobei die französischen Brote französische Brote im engeren Sinn sind.

4. Verfahren gemäß einem der Ansprüche 1 bis 3, wobei das Enzympräparat wenigstens eine Amylase- und/oder Hemizellulase- und/oder Glukose-Oxidase- und/oder Lipase- und/oder Phospholipaseaktivität aufweist, vorzugsweise wenigstens zwei dieser Aktivitäten, und noch bevorzugter wenigstens drei dieser Aktivitäten.

5. Verfahren gemäß einem der Ansprüche 1 bis 4, wobei das verbackbare, gegärte dehydrierte Getreidemehl erhalten wurde durch Trocknen eines Sauerteigs auf Basis von Weizenmehl, eines Sauerteigs auf Basis von Roggenmehl oder eines Sauerteigs auf Basis einer Mischung aus Weizen- und Roggenmehl oder auch eines Sauerteigs auf Basis von Müllerei-Feinkorn aus verbackbaren Getreiden oder auch eines Sauerteigs auf Basis einer Mischung aus Mehl(en) und Müllerei-Feinkorn aus verbackbaren Getreiden, wobei vorzugsweise das verbackbare, gegärte dehydrierte Getreidemehl durch Trocknen eines Sauerteigs auf Basis von Weizen erhalten wurde.

6. Verfahren gemäß einem der vorausgegangenen Ansprüche, bei welchem das Rezept des nicht vorgegärten Teigs durch eine der folgenden drei Eigenschaften gekennzeichnet ist, vorzugsweise durch zwei der Eigenschaften, und noch bevorzugter durch die folgenden drei Eigenschaften: der Teig enthält pro 100 Gewichtsanteile Weizenmehl:
- zwischen 57 und 64 Gewichtsanteile Wasser, vorzugsweise zwischen 57 und 63 Gewichtsanteile Wasser, vorzugsweise zwischen 58 und 62 Gewichtsanteile; und/oder
- Hefe in einer Menge entsprechend zwischen 1,0 und 3,5 Gewichtsanteilen Frischhefe mit 30% Trockensubstanz, vorzugsweise entsprechend zwischen 1,7 und 3,0 Gewichtsanteilen Frischhefe mit 30% Trockensubstanz, wenn das Verfahren ein gesteuertes Gehen ist, vorzugsweise zwischen 1,0 und 1,5 Gewichtsanteilen, wenn das Verfahren ein langsames Gehen ist, und/oder
- zwischen 1,8 und 3,0 Gewichtsanteile Salz, vorzugsweise zwischen 2,0 und 2,2 Gewichtsanteile, noch bevorzugter ungefähr 2,0 Gewichtsanteile.

7. Verfahren gemäß einem der vorausgegangenen Ansprüche, bei welchem das Gären der gegebenenfalls gestalteten Teiglaibe wenigstens zwei Schritte aufweist, wobei bei einem Schritt die Temperatur in der gesteuerten Gärkammer zwischen 0 und 4°C liegt und bei einem Schritt die Temperatur in der gesteuerten Gärkammer gleich oder größer als 15°C ist.

8. Verfahren gemäß Anspruch 7, bei welchem das Gären der gegebenenfalls gestalteten Teiglaibe aufweist:
- einen ersten Schritt, bei dem die Temperatur in der gesteuerten Gärkammer zwischen 0 und 4°C liegt, wobei dieser erste Schritt eine Dauer von weniger als oder gleich 72 Stunden, vorzugsweise weniger als oder gleich 48 Stunden aufweist, und
- einen zweiten Schritt, bei dem die Temperatur in der gesteuerten Gärkammer zwischen 18 und 25°C, vorzugsweise zwischen 18 und 20°C, liegt, wobei dieser zweite Schritt eine Dauer aufweist, die es ermöglicht, das für die gestalteten Teiglaibe gewünschte Volumen zu erhalten.

9. Verfahren gemäß einem der Ansprüche 1 bis 6, wobei das Gären der gegebenenfalls gestalteten Teiglaibe aus einem Schritt besteht, bei dem die Temperatur in der gesteuerten Gärkammer zwischen 7 und 13°C, vorzugsweise zwischen 9 und 11°C, liegt, wobei dieser einzige Schritt eine Dauer von 12 bis 15 Stunden aufweist.

10. Verfahren gemäß einem der Ansprüche 1 sowie 3 bis 6, bei welchem das Gären der gegebenenfalls gestalteten Teiglaibe die folgenden aufeinanderfolgenden Schritte aufweist:
- einen Schritt, bei dem die Temperatur zwischen 18 und 25°C, vorzugsweise zwischen 18 und 23°C liegt,
- ein Abkühlen der Teiglaibe in der gesteuerten Gärkammer bei einer Temperatur zwischen 0 und 4°C, vorzugsweise bei einer Temperatur von 0°C, für maximal 60 Minuten,
- einen Schritt, bei dem die Temperatur in der gesteuerten Gärkammer zwischen 0 und 4°C liegt, wobei dieser Schritt eine Dauer von weniger als oder gleich 15 Stunden aufweist, und
- ein Wiederaufheizen der Teiglaibe in der gesteuerten Gärkammer bei einer Temperatur zwischen 20 und 30°C für weniger als 60 Minuten.

11. Zubereitung für die Herstellung von französischen Broten, welche es ermöglicht, zu 100 Gewichtsanteilen Weizenmehl einzubringen:
- 0,40 bis 1,20 Gewichtsanteile verbackbares, gegärtes dehydriertes Getreidemehl, vorzugsweise zwischen 0,50 und 1,00 Gewichtsanteile;
- 0,40 bis 1,00 Gewichtsanteile Kleie, vorzugsweise zwischen 0,50 und 0,80 Gewichtsanteile, wobei die Kleie vorzugsweise mikronisierte Kleie und noch bevorzugter mikronisierte Weizenkleie ist;
- 0,30 bis 1,00 Gewichtsanteile Weizengluten, vorzugsweise zwischen 0,35 und 0,70 Gewichtsanteile, und noch bevorzugter zwischen 0,40 und 0,65 Gewichtsanteile;
- 0,10 bis 0,30 Gewichtsanteile Mono- und Diglyceride von gesättigten Nahrungsfettsäuren, vorzugsweise zwischen 0,15 und 0,25 Gewichtsanteile, wobei die Mono- und Diglyceride von gesättigten Nahrungsfettsäuren vorzugsweise wenigstens 90% Monoglyceride enthalten;
- 0,008 bis 0,025 Gewichtsanteile Ascorbinsäure, vorzugsweise zwischen 0,009 und 0,018 Gewichtsanteile; und
- ein Enzympräparat.

12. Zubereitung gemäß einem der Ansprüche 12 oder 13, bei welcher die französischen Brote französische Brote im engeren Sinn sind.

13. Zubereitung gemäß einem der Ansprüche 12 bis 14, bei welcher das Enzympräparat wenigstens eine Amylase- und/oder Hemizellulase- und/oder Glukose-Oxidase- und/oder Lipase- und/oder Phospholipaseaktivität aufweist, vorzugsweise wenigstens zwei dieser Aktivitäten, und noch bevorzugter wenigstens drei dieser Aktivitäten.

14. Zubereitung gemäß einem der Ansprüche 11 bis 12, bei welcher das verbackbare, gegärte dehydrierte Getreidemehl erhalten wurde durch Trocknen eines Sauerteigs auf Basis von Weizenmehl, eines Sauerteigs auf Basis von Roggenmehl oder eines Sauerteigs auf Basis einer Mischung aus Weizen- und Roggemnehl oder auch eines Sauerteigs auf Basis von Müllerei-Feinkorn aus verbackbaren Getreiden oder auch eines Sauerteigs auf Basis einer Mischung aus Mehl(en) und Müllerei-Feinkorn aus verbackbaren Getreiden, wobei vorzugsweise das verbackbare, gegärte dehydrierte Getreidemehl durch Trocknen eines Sauerteigs auf Basis von Weizen erhalten wurde.

15. Verwendung einer Zubereitung gemäß einem der Ansprüche 11 bis 14 in einem Brotbereitungs-Verfahren zur Herstellung von französischem Brot und vorzugsweise in einem Brotbereitungs-Verfahren gemäß einem der Ansprüche 1 bis 9 und noch bevorzugter in einem Verfahren, bei welchem die französischen Brote französische Brote im engeren Sinn sind.

## Claims

1. Direct breadmaking process for the production of French-type breads, having a total rising time of more than 12 hours, the said process comprising:
- kneading of a non-prefermented dough having a formula essentially composed of wheat flour, water, yeast, salt, an enzymatic preparation and, for every 100 parts by weight of wheat flour:
• 0.40 to 1.20 parts by weight of dehydrated fermented breadmaking cereal flour, preferably between 0.50 and 1.00 parts by weight;
• 0.40 to 1.00 parts by weight of bran, preferably between 0.50 and 1.00 parts by weight, the said bran preferably being micronized bran, and more preferably, micronized wheat bran;
• 0.30 to 1.00 parts by weight of wheat gluten, preferably between 0.35 and 0.70 parts by weight, and more preferably between 0.40 and 0.65 parts by weight;
• 0.10 to 0.30 parts by weight of mono- and di-glycerides of edible saturated fatty acids, preferably between 0.15 and 0.25 parts by weight, the said mono- and di-glycerides of edible saturated fatty acids preferably containing at least 90% of monoglycerides; and
• 0.008 to 0.025 parts by weight of ascorbic acid, preferably between 0.009 and 0.018 parts by weight;
- dividing up and if required shaping of the kneaded dough into loaves;
- rising of the loaves in a controlled proving chamber, the said rising involving at least one stage in which the temperature in the controlled proving chamber is less than or equal to 15°C, preferably less than or equal to 12°C; and
- baking of the risen loaves,
the total rising time being the time between the end of kneading and the start of baking.

2. Process according to Claim 1, modified in that the stage in the chamber at a temperature of less than or equal to 15°C, preferably less than or equal to 12°C, takes place before the mass of kneaded dough is divided.

3. Process according to any one of Claims 1 to 2 where the French-type breads are French-type breads in the strict sense of the term.

4. Process according to any one of Claims 1 to 3 in which the enzymatic preparation exhibits at least one amylase and/or hemicellulase and/or glucose oxidase and/or lipase and/or phospholipase activity, preferably at least two of these activities, and more preferably at least three of these activities.

5. Process according to any one of Claims 1 to 4 in which the dehydrated fermented breadmaking cereal flour has been obtained by drying a leaven based on wheat flour, a leaven based on rye flour or a leaven based on a mixture of wheat flour and rye flour, or a leaven based on milling byproducts of breadmaking cereals, or a leaven based on a mixture of flour(s) and milling byproduct(s) of breadmaking cereals, the dehydrated fermented breadmaking cereal flour preferably having been obtained by drying a leaven based on wheat flour.

6. Process according to any one of the preceding claims in which the formula of the non-prefermented dough is **characterized by** one, preferably two, and more preferably all, of the following three characteristics: the dough contains, for every 100 parts by weight of wheat flour:
- between 57 and 64 parts by weight of water, preferably between 57 and 63 parts by weight of water, preferably between 58 and 62 parts by weight; and/or
- yeast in a quantity equivalent to between 1.0 and 3.5 parts by weight of fresh yeast containing 30% dry matter, preferably equivalent to between 1.7 and 3.0 parts by weight of fresh yeast containing 30% dry matter if the process is a controlled rising process, and preferably between 1.0 and 1.5 parts by weight if the process is a slow rising process, and/or
- between 1.8 and 3.0 parts by weight of salt, preferably between 2.0 and 2.2 parts by weight, more preferably about 2.0 parts by weight.

7. Process according to any one of the preceding claims in which the rising of the possibly shaped loaves involves at least two stages: a stage in which the temperature in the controlled proving chamber is between 0 and 4 °C, and a stage in which the temperature in the controlled proving chamber is equal to or more than 15°C.

8. Process according to Claim 7 in which the rising of the possibly shaped loaves involves:
- a first stage in which the temperature in the controlled proving chamber is between 0 and 4 °C, the said first stage having a duration of less than or equal to 72 hours, preferably less than or equal to 48 hours, and
- a second stage in which the temperature in the controlled proving chamber is between 18 and 25 °C, preferably between 18 and 20 °C, the said second stage having a duration allowing loaves of the desired volume to be obtained from the shaped loaves.

9. Process according to any one of Claims 1 to 6 in which the rising of the possibly shaped loaves consists in a stage in which the temperature in the controlled proving chamber is between 7 and 13 °C, preferably between 9 and 11 °C, this single stage having a duration of 12 to 15 hours.

10. Process according to any one of Claims 1 and 3 to 6, in which the rising of the possibly shaped loaves etc. involves the following successive stages:
- a stage in which the temperature is between 18 and 25 °C, preferably between 18 and 23 °C,
- cooling of the loaves in the controlled proving chamber to a temperature between 0 and 4 °C, preferably to a temperature of 0°C, within 60 minutes maximum,
- a stage in which the temperature in the controlled proving chamber is between 0 and 4 °C, this stage having a duration of less than or equal to 15 hours, and
- reheating of the loaves in the controlled proving chamber to a temperature between 20 and 30 °C in less than 60 minutes.

11. Preparation for making French-type breads, for adding to 100 parts by weight of wheat flour:
- 0.40 to 1.20 parts by weight of dehydrated fermented breadmaking cereal flour, preferably between 0.50 and 1.00 parts by weight;
- 0.40 to 1.00 parts by weight of bran, preferably between 0.50 and 0.80 parts by weight, the said bran preferably being micronized bran, and more preferably, micronized wheat bran;
- 0.30 to 1.00 parts by weight of wheat gluten, preferably between 0.35 and 0.70 parts by weight, and more preferably between 0.40 and 0.65 parts by weight;
- 0.10 to 0.30 parts by weight of mono- and di-glycerides of edible saturated fatty acids, preferably between 0.15 and 0.25 parts by weight, the said mono- and di-glycerides of edible saturated fatty acids preferably containing at least 90% of monoglycerides;
- 0.008 to 0.025 parts by weight of ascorbic acid, preferably between 0.009 and 0.018 parts by weight; and
- an enzymatic preparation.

12. Preparation according to Claim 11 where the French-type breads are French-type breads in the strict sense of the term.

13. Preparation according to any one of Claims 11 to 12 in which the enzymatic preparation exhibits at least one amylase and/or hemicellulase and/or glucose oxidase and/or lipase and/or phospholipase activity, preferably at least two of these activities, and more preferably at least three of these activities.

14. Preparation according to any one of Claims 11 to 12 in which the dehydrated fermented breadmaking cereal flour has been obtained by drying a leaven based on wheat flour, a leaven based on rye flour or a leaven based on a mixture of wheat flour and rye flour, or a leaven based on milling byproducts of breadmaking cereals, or a leaven based on a mixture of flour(s) and milling byproduct(s) of breadmaking cereals, the dehydrated fermented breadmaking cereal flour preferably having been obtained by drying a leaven based on wheat flour.

15. Use of a preparation according to any one of Claims 11 to 14 in a breadmaking process for the production of French-type breads, preferably in a breadmaking process according to any one of Claims 1 to 9, and more preferably in a process in which the French-type breads are French-type breads in the strict sense of the term.
